(19) Europäisches Patentamt
European Patent Office
Office européen des brevets

(11) **EP 2 112 739 B1**

(12) **FASCICULE DE BREVET EUROPEEN**

(45) Date de publication et mention
de la délivrance du brevet:
**10.10.2018 Bulletin 2018/41**

(51) Int Cl.:
***H02J 7/00*** *(2006.01)*     ***H02J 7/14*** *(2006.01)*
***B60K 6/28*** *(2007.10)*

(21) Numéro de dépôt: **09155619.1**

(22) Date de dépôt: **19.03.2009**

(54) **PROCÉDÉ DE LIMITATION DE L'ÉCHAUFFEMENT INTERNE D'UN SUPERCONDENSATEUR.**

VERFAHREN ZUR BEGRENZUNG DER INNEREN ERWÄRMUNG EINES
SUPER-KONDENSATORS

METHOD FOR LIMITING THE INTERNAL HEATING OF AN ULTRACAPACITOR.

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **23.04.2008 FR 0852714**

(43) Date de publication de la demande:
**28.10.2009 Bulletin 2009/44**

(73) Titulaire: **PSA Automobiles SA**
**78300 Poissy (FR)**

(72) Inventeur: **Guerin, Nicolas**
**91440 Bures Sur Yvette (FR)**

(74) Mandataire: **Ménès, Catherine**
**PSA Automobiles SA**
**VPIB - LG081**
**18 rue des Fauvelles**
**92250 La Garenne Colombes (FR)**

(56) Documents cités:
**US-A1- 2001 017 243**     **US-A1- 2005 040 789**
**US-A1- 2005 077 867**     **US-B1- 6 281 598**

**Description**

La présente invention concerne l'utilisation de supercondensateurs dans un véhicule automobile et plus particulièrement un procédé de limitation de l'échauffement interne des supercondensateurs avec pour objectif de rendre maximum leur durée de vie.

Afin de réaliser certaines fonctions dans les véhicules automobiles, notamment afin de diminuer la consommation de carburant, les véhicules peuvent être équipés d'une source de puissance électrique qui s'ajoute à la source d'énergie habituelle (une batterie de 12 Volts). La source de puissance électrique supplémentaire est souvent un supercondensateur, lequel est constitué d'un ensemble de cellules capacitives élémentaires connectées en série. Un supercondensateur permet de stocker rapidement l'énergie électrique et de la restituer plus rapidement qu'une batterie.

Cependant, le fait de charger ou de décharger un supercondensateur contribue à son échauffement interne (échauffement par effet Joule lié au courant passant dans les cellules). Or la durée de vie d'un supercondensateur est directement liée à son état thermique. Afin de rendre maximum la durée de vie du composant, il faut éviter de l'exposer à des températures élevées (typiquement supérieures à 50 ou 60°C). Le contrôle thermique des supercondensateurs revêt alors une importance primordiale pour atteindre une durée de vie satisfaisante du composant.

Des solutions ont déjà été proposées pour utiliser au mieux les supercondensateurs. Par exemple, la demande de brevet US 2004/0204874 A1 décrit un appareil qui permet de déterminer la puissance maximum admissible d'un supercondensateur en fonction de sa température dans un véhicule hybride équipé d'une pile à combustible. Des valeurs de courant de charge et de décharge sont déterminées. En contrôlant la puissance réelle du moteur basée sur la puissance de sortie de la pile à combustible et sur la puissance maximum du condensateur, il est possible d'éviter une limitation excessive de la puissance réelle du moteur, tout en protégeant la capacité. Cependant, aucune action n'est proposée dans ce document pour limiter la température du condensateur.

La demande de brevet DE 102004023502 A1 concerne une méthode de stockage d'énergie électrique dans un condensateur. Selon cette méthode, on mesure la température et la tension de charge du condensateur et on estime le gradient de température du condensateur. Le niveau de tension est abaissé si la température estimée du condensateur est supérieure à une température prédéterminée.

Le brevet JP 2004180394 A 20040624 propose également de limiter la tension d'un condensateur en fonction de sa température.

Le brevet US 6,066,936 décrit un système pour éviter la détérioration de condensateurs par des températures élevées. Pour cela, le système comporte un relais et des résistances connectées aux condensateurs. Lorsque la tension de charge dépasse un seuil correspondant à une température estimée, le relais se ferme et les condensateurs sont déchargés à travers les résistances.

On remarque que les solutions proposées dans les documents cités ci-dessus font appel à la limitation de la tension de travail du condensateur, pour prolonger sa durée de vie et n'impactent pas la température de fonctionnement du supercondensateur.

La présente invention propose un procédé d'utilisation d'un supercondensateur selon lequel on mesure la température du supercondensateur et, lorsque la température dépasse un seuil prédéterminé, on limite le courant efficace fourni ou emmagasiné par le supercondensateur, afin d'éviter ou de diminuer son vieillissement dû à son échauffement,

Lorsque le supercondensateur contribue à remplir différentes fonctions du véhicule, au moins l'une des fonctions est inhibée, totalement ou partiellement. La fonction inhibée peut être par exemple le démarrage du moteur du véhicule, l'accélération du véhicule (fonction boost), la récupération d'énergie de décélération du véhicule destinée à recharger le supercondensateur ou la charge du supercondensateur.

Lorsque le véhicule est équipé d'un alternateur réversible pouvant charger le supercondensateur ou procurer de l'énergie mécanique au moteur pour le démarrer ou pour l'accélérer, la fonction d'accélération peut être temporairement supprimée ou diminuée lorsque la température du supercondensateur atteint un premier seuil T1 de température prédéterminée.

Lorsque la température du supercondensateur atteint un deuxième seuil T2 de température prédéterminée, avec T2 supérieure à T1, la charge du supercondensateur peut être inhibée, au moins partiellement.

Il est également possible de limiter l'intensité du courant de charge, ou le temps de charge, du supercondensateur.

Si le véhicule est équipé d'un système de récupération d'énergie de décélération du véhicule, ledit système permettant de charger le supercondensateur, la charge du supercondensateur peut être inhibée, au moins partiellement, en limitant le niveau de récupération d'énergie de décélération. Enfin, lorsque la température du supercondensateur atteint un troisième seuil T3 de température prédéterminée, avec T3 supérieure à T2, la fonction de récupération d'énergie de décélération peut être complètement inhibée.

D'autres avantages et caractéristiques de l'invention apparaîtront au cours de la description qui suit d'un mode de réalisation de l'invention, donné à titre d'exemple non limitatif.

Selon la présente invention, il est proposé de mesurer la température d'un supercondensateur utilisé dans un véhicule afin d'accomplir certaines fonctions et de contrôler (limiter) la valeur du courant efficace traversant le supercondensateur si la température du supercondensateur dépasse un seuil prédéterminé. Le courant contribuant à l'échauffement du supercondensateur peut être un courant de charge ou de décharge du supercondensateur. Physiquement, le courant efficace I $_{eff}$ est l'intensité du courant continu qui dissiperait la même puissance que le courant i(t) à travers le supercondensateur. Le courant efficace est en quelque sorte l'image de l'effet Joule et donc de l'échauffement interne du supercondensateur. En mesurant la température du supercondensateur de façon à contrôler son échauffement, on limite son vieillissement.

Lorsque le supercondensateur est utilisé pour permettre la réalisation de certaines fonctions, comme dans le cas d'un véhicule hybride ou d'un véhicule muni d'un alternateur réversible (ou alterno-démarreur) utilisé pour la récupération d'énergie cinétique et/ou pour l'arrêt et le redémarrage automatique du moteur thermique du véhicule, la limitation du courant efficace est obtenue en inhibant complètement ou partiellement au moins l'une de ces fonctions. Le supercondensateur peut emmagasiner ou délivrer de l'énergie selon les périodes d'utilisation du véhicule.

Ainsi, pendant les phases d'emmagasinage d'énergie :

- Lors des phases de décélération du véhicule (récupération de l'énergie cinétique de décélération). Le courant de charge peut typiquement être de l'ordre de quelques centaines d'ampères (suivant le niveau de puissance de la fonction de récupération d'énergie et le niveau de tension considéré). Nous noterons $I_{récup}$ le courant de recharge du supercondensateur pendant les phases de récupération d'énergie au freinage.

- Lors des phases de génération ou recharge classique (hors phase de récupération d'énergie). Nous noterons $I_{géné}$ le courant de charge du supercondensateur pendant les phases de génération.

Pendant les phases de fourniture d'énergie :

- * Lors des phases de démarrage du moteur thermique, les courants sont très importants sur des courtes durées (typiquement de l'ordre de 600 à 800 A sur des durées de l'ordre de 500 ms). Nous noterons $I_{dem}$ le courant délivré par le supercondensateur pendant les phases de démarrage du moteur thermique.

- * Lors des phases d'assistance à la traction du véhicule (ou d'accélération ou de « boost »). Nous noterons $I_{boost}$ le courant délivré par le supercondensateur pendant les phases d'accélération ou de boost.

Le courant efficace *Ieff* vu par le supercondensateur peut s'écrire de la façon suivante :

$$Ieff = \sqrt{\int (Iucap)^2 \cdot dt} = \sqrt{\int_{\substack{phases \\ démarrage}} (Idem)^2 \cdot dt + \int_{\substack{phases \\ boost}} (Iboost)^2 \cdot dt + \int_{\substack{phases \\ recupératin}} (Irecup)^2 \cdot dt + \int_{\substack{phases \\ génération}} (Igene)^2 \cdot dt}$$ dans cette

équation *Iucap* représente le courant électrique vu par le supercondensateur.

Le procédé proposé consiste à délester ou inhiber tout ou partie des fonctionnalités décrites ci-dessus afin de limiter les courants de charge ou de décharge liés à chaque fonction (démarrage, »boost », récupération d'énergie et génération d'énergie), ou bien leur durée d'activation, dans le but de limiter l'une ou l'autre des composantes du courant efficace global vu par le supercondensateur.

La limitation peut se faire par le maintien d'une fonction mais « dégradée » (c'est à dire maintien de la fonction mais avec des niveaux de courant plus faibles) ou par l'inhibition totale de la fonction. Par exemple, on peut décider de limiter la fonction de récupération d'énergie à 100A pendant 10s maximum alors qu'au nominal elle serait de 200A pendant 20s maximum.

Les limitations peuvent également s'effectuer sur plusieurs niveaux, en fonction des états thermiques du supercondensateur et du besoin (fort ou faible) de limiter l'échauffement interne du supercondensateur.

A titre d'exemple, la stratégie décrite ci-dessous peut être adoptée pour un véhicule muni de la fonction de récupération d'énergie et de la fonction d'arrêt et de redémarrage automatique du moteur thermique :

Si l'état thermique du supercondensateur est satisfaisant (température inférieure à un seuil $T_0$ prédéterminé), toutes les fonctions sont proposées avec leur niveau de performance nominal.

Si la température atteint un premier seuil de température $T_1$ prédéterminée qui exige une diminution du courant efficace pour faire une première limitation de son échauffement interne, la fonction d'accélération ou « boost » peut être inhibée.

L'inhibition de la fonction d'accélération réduira le courant de décharge des supercondensateurs (*Iboost* ramené à 0) ainsi que le courant de recharge visant à « rembourser » l'énergie utilisée au cours de la phase d'accélération inhibée (réduction en conséquence de *Igéné* voire *Irécup*)

Si la température du supercondensateur atteint un deuxième seuil de température $T_2$, avec $T_2$ supérieure à $T_1$, il est possible de limiter le niveau de récupération d'énergie de décélération à des courants plus faibles (typiquement 100 A pendant 10s maximum au lieu de 200A pendant 20s maximum) dans un premier temps.

Enfin, si la température atteint un nouveau palier de température $T_3$ avec $T_3$ supérieure à $T_2$, la fonction récupération d'énergie peut alors être complètement inhibée.

Le courant efficace diminue et devient alors :

$$Ieff = \sqrt{\int\limits_{\substack{phases \\ démarrage}} (Idem)^2 \cdot dt + 0 + 0 + \int\limits_{\substack{phases \\ génération}} (Igene)^2 \cdot dt}$$

Dans cet exemple de stratégie, la fonction d'arrêt et de redémarrage est maintenue le plus longtemps possible car c'est la fonction la plus visible par le conducteur. La récupération d'énergie en décélération peut être réduite sans que ceci soit directement visible par le conducteur. L'état de charge du supercondensateur est maintenu à un niveau juste suffisant pour permettre les redémarrages du moteur thermique dans des conditions nominales.

Les phases de génération d'énergie (qui pourront avantageusement être situées pendant des phases de décélération du véhicule et donc se ramener à des phases de récupération d'énergie mais à plus faible niveau de puissance) ne servent en fait qu'à recharger le supercondensateur pour récupérer l'énergie dépensée pour les redémarrages du moteur thermique.

Si les mesures précédemment décrites ne suffisent pas à contenir le supercondensateur dans un état de température satisfaisant, et si un nouveau seuil de température $T_4$ est franchi, avec $T_4$ supérieure à $T_3$, la fonction d'arrêt et de redémarrage automatique du moteur thermique peut alors être inhibée. Le courant efficace vu par le supercondensateur sera alors nul, ou quasiment nul. Dans ce cas dernier, et afin de rendre maximum la durée de vie du supercondensateur, son niveau de tension peut également être abaissé à son minimum, puisqu'aucune tension ou énergie minimale n'est alors requise par les fonctions hybrides, puisqu'elles sont toutes inhibée.

La combinaison tension faible et courant efficace nul (et donc échauffement interne nul) contribuera alors à rendre maximum la durée de vie du supercondensateur (puisque le niveau de tension aux bornes d'un supercondensateur est, comme sa température, un facteur de vieillissement du supercondensateur).

D'autres modes de réalisation que ceux décrits et représentés peuvent être conçus par l'homme du métier sans sortir du cadre de la présente invention. Par exemple, les mises en oeuvre ont été décrites pour un supercondensateur mais elles seraient identiques pour un ensemble de supercondensateurs. Dans l'exemple décrit, les priorités de délestage et d'inhibition des fonctions ont été données à titre indicatif. Ainsi, on peut bien entendu délester ou inhiber par exemple la fonction d'arrêt et de redémarrage automatique avant la fonction d'accélération (« boost »), ou la fonction de récupération d'énergie avant la fonction d'accélération. De même, d'autres fonctionnalités liées aux supercondensateurs non décrites ici peuvent induire des courants de charge ou de décharge du supercondensateur, la limitation du courant efficace pouvant s'appliquer à toutes les fonctions impliquant une charge ou une décharge du supercondensateur. Par exemple, en décharge du condensateur, la fonction d'arrêt et de redémarrage automatique du moteur thermique, la fonction d'accélération (« boost ») et la fonction d'alimentation de consommateurs électriques avec l'énergie du supercondensateur (ce qui correspond à délester l'alternateur). En charge du supercondensateur, la limitation du courant efficace peut s'appliquer par exemple, à la récupération d'énergie au freinage et à la charge classique du supercondensateur par l'alternateur.

Les stratégies de limitation du courant efficace peuvent également agir sur ces fonctions afin de limiter les courants de charge et/ou décharge des supercondensateurs.

## Revendications

**1.** Procédé d'utilisation d'un supercondensateur contribuant, en association avec un alternateur réversible, à remplir différentes fonctions dont le démarrage du moteur du véhicule, l'accélération du véhicule (fonction 'boost'), la récupération d'énergie de décélération du véhicule destinée à recharger le supercondensateur et la charge du supercondensateur, **caractérisé en ce qu'**il consiste, afin d'éviter le vieillissement dudit supercondensateur dû à son échauffement, à mesurer la température du supercondensateur et, lorsque la température dépasse un seuil prédéterminé, à limiter le courant efficace fourni ou emmagasiné par le supercondensateur en inhibant totalement ou partiellement au moins l'une desdites fonctions dont la limitation du courant efficace est liée à chaque fonction et s'effectue sur plusieurs niveaux.

**2.** Procédé selon la revendication 1, **caractérisé en ce que** la fonction d'accélération est temporairement supprimée lorsque la température du supercondensateur atteint un premier seuil T1 de température prédéterminée.

3. Procédé selon la revendication 2, **caractérisé en ce que**, lorsque la température du supercondensateur atteint un deuxième seuil T2 de température prédéterminée, avec T2 supérieure à T1, la charge du supercondensateur est inhibée au moins partiellement.

4. Procédé selon la revendication 2, **caractérisé en ce que** l'intensité du courant de charge du supercondensateur est réduite pendant une phase d'inhibition totale ou partielle d'une des fonctions.

5. Procédé selon la revendication 3, **caractérisé en ce que** le temps de charge ou de décharge du supercondensateur est réduit pendant une phase d'inhibition totale ou partielle d'une des fonctions.

6. Procédé selon l'une des revendications 3 à 5, **caractérisé en ce que**, le véhicule étant équipé d'un système de récupération d'énergie de décélération du véhicule, ledit système permettant de charger le supercondensateur, la charge du supercondensateur est inhibée au moins partiellement en limitant le niveau de récupération d'énergie de décélération.

7. Procédé selon la revendication 6, **caractérisé en ce que**, lorsque la température du supercondensateur atteint un troisième seuil T3 de température prédéterminée, avec T3 supérieure à T2, la fonction de récupération d'énergie de décélération est complètement inhibée.

**Patentansprüche**

1. Verfahren für den Gebrauch eines Superkondensators, der verbunden mit einem umkehrbaren Starter-Generator zum Erfüllen unterschiedlicher Funktionen beiträgt, darunter das Anlassen des Motors des Fahrzeugs, das Beschleunigen des Fahrzeugs ("Boost"-Funktion), das Rückgewinnen von Verlangsamungsenergie des Fahrzeugs, die zum Aufladen des Superkondensators bestimmt ist, und das Laden des Superkondensators, **dadurch gekennzeichnet, dass** es darin besteht, zum Vermeiden des Alterns des Superkondensators aufgrund seiner Erwärmung, die Temperatur des Superkondensators zu messen, und, wenn die Temperatur einen vorbestimmten Schwellenwert überschreitet, den Effektivstrom zu begrenzen, der von dem Superkondensator geliefert oder gespeichert wird, indem ganz oder teilweise mindestens eine der Funktionen, deren Effektivstrombegrenzung mit jeder Funktion zusammenhängt und auf mehreren Niveaus erfolgt, begrenzt wird.

2. Verfahren nach Anspruch 1, **dadurch gekennzeichnet, dass** die Beschleunigungsfunktion vorübergehend unterbunden wird, wenn die Temperatur des Superkondensators einen ersten Schwellenwert T1 mit vorbestimmter Temperatur erreicht.

3. Verfahren nach Anspruch 2, **dadurch gekennzeichnet, dass**, wenn die Temperatur des Superkondensators einen zweiten Schwellenwert T2 erreicht, wobei T2 größer ist als T1, das Laden des Superkondensators mindestens teilweise unterbunden wird.

4. Verfahren nach Anspruch 2, **dadurch gekennzeichnet, dass** die Stärke des Ladestroms des Superkondensators während einer Phase vollständiger oder teilweiser Unterbindung einer der Funktionen verringert wird.

5. Verfahren nach Anspruch 3, **dadurch gekennzeichnet, dass** die Lade- oder Entladezeit des Superkondensators während einer Phase vollständiger oder teilweiser Unterbindung einer der Funktionen verringert wird.

6. Verfahren nach einem der Ansprüche 3 bis 5, **dadurch gekennzeichnet, dass**, da das Fahrzeug mit einem Verlangsamungsenergie-Rückgewinnungssystem des Fahrzeugs ausgestattet ist, das System, da es erlaubt, den Superkondensator zu laden, das Laden des Superkondensators mindestens teilweise unterbunden wird, indem das Verlangsamungsenergie-Rückgewinnungsniveau begrenzt wird.

7. Verfahren nach Anspruch 6, **dadurch gekennzeichnet, dass**, wenn die Temperatur des Superkondensators einen dritten Schwellenwert T3 mit vorbestimmter Temperatur erreicht, wobei T3 größer ist als T2, die Verlangsamungsenergierückgewinnungsfunktion vollständig unterbunden wird.

**Claims**

1. A method for the use of an ultracapacitor contributing, in association with a reversible alternator, to fulfilling various functions including the starting of the engine of the vehicle, the acceleration of the vehicle ("boost" function), the recovery of deceleration energy of the vehicle, intended to recharge the ultracapacitor and the charging of the ultracapacitor, **characterized in that** it consists, so as to prevent the ageing of said ultracapacitor due to its heating, in measuring the temperature of the ultracapacitor and, when the temperature exceeds a predetermined threshold, in limiting the effective current supplied or stored by the ultracapacitor by totally or partially inhibiting at least one of said functions, of which the limitation of the effective current is linked to each function and is carried out over several levels.

2. The method according to Claim 1, **characterized in that** the acceleration function is temporarily suppressed when the temperature of the ultracapacitor reaches a first predetermined temperature threshold T1.

3. The method according to Claim 2, **characterized in that**, when the temperature of the ultracapacitor reaches a second predetermined temperature threshold T2, with T2 being greater than T1, the charge of the ultracapacitor is at least partially inhibited.

4. The method according to Claim 2, **characterized in that** the intensity of the charge current of the ultracapacitor is reduced during a total or partial inhibition phase of one of the functions.

5. The method according to Claim 3, **characterized in that** the charge or discharge time of the ultracapacitor is reduced during a total or partial inhibition phase of one of the functions.

6. The method according to one of Claims 3 to 5, **characterized in that**, the vehicle being equipped with a system of deceleration energy recovery of the vehicle, said system permitting the ultracapacitor to be charged, the charge of the ultracapacitor is at least partially inhibited by limiting the level of recovery of deceleration energy.

7. The method according to Claim 6, **characterized in that**, when the temperature of the ultracapacitor reaches a third predetermined temperature threshold T3, with T3 being greater than T2, the function of deceleration energy recovery is inhibited entirely.

## RÉFÉRENCES CITÉES DANS LA DESCRIPTION

**Documents brevets cités dans la description**

- US 20040204874 A1
- DE 102004023502 A1
- JP 2004180394 A
- US 6066936 A